**Europäisches Patentamt**

**European Patent Office**

**Office européen des brevets**

(19)

(11) Veröffentlichungsnummer : **0 328 873 B1**

(12) # EUROPÄISCHE PATENTSCHRIFT

(45) Veröffentlichungstag der Patentschrift :
**24.06.92 Patentblatt 92/26**

(51) Int. Cl.$^5$ : **B60C 15/02, B60C 15/024**

(21) Anmeldenummer : **89100527.4**

(22) Anmeldetag : **13.01.89**

(54) **Luftbereiftes Fahrzeugrad.**

(30) Priorität : **13.02.88 DE 3804505**

(43) Veröffentlichungstag der Anmeldung :
**23.08.89 Patentblatt 89/34**

(45) Bekanntmachung des Hinweises auf die
Patenterteilung :
**24.06.92 Patentblatt 92/26**

(84) Benannte Vertragsstaaten :
**BE DE ES FR GB IT LU NL**

(56) Entgegenhaltungen :
**EP-A- 0 129 675**
**EP-A- 0 153 295**

(56) Entgegenhaltungen :
**CH-A- 295 878**
**DE-A- 3 605 803**
**DE-C- 959 156**
**FR-A- 957 217**

(73) Patentinhaber : **Continental
Aktiengesellschaft
Königsworther Platz 1
W-3000 Hannover 1 (DE)**

(72) Erfinder : **Frerichs, Udo
Buchenweg 7
W-3012 Langenhagen 8 (DE)**
Erfinder : **Boltze, Carsten
Buschweg 7
W-3013 Wennigsen (DE)**

## Beschreibung

Die Erfindung betrifft ein luftbereiftes Fahrzeugrad mit einer starren Felge, die im wesentlichen sich nach radial innen erstreckende Felgenhörner und auf der radial inneren Seite des Felgenkranzes in Querrichtung geneigt verlaufende Felgensitzflächen und je ein Montagehochbett für jeden Reifenwulst aufweist und die auf der radial äußeren Seite mit Pannenlaufstützflächen versehen sein kann, und mit einem Reifen aus Gummi oder gummiähnlichen Kunststoffen, dessen Wülste mit Wulstsitzflächen radial innen vom Felgenkranz neben den Felgenhörnern auf den Felgensitzflächen angeordnet sind und dessen Karkasse in den Wülsten durch Umschlingen von drucksteifen Wulstkernen verankert ist.

Ein solches Fahrzeugrad wird z.B. in der DE-A-30 00 428 beschrieben. Ein weiteres Fahrzeugrad dieser Art ist der DE-A-36 21 849 entnehmbar. Die Fahrzeugräder zeichnen sich durch verbesserte Fahreigenschaften und insbesondere durch einen sehr hohen Fahrkomfort aus. Wegen der Anordnung der Reifenwülste am radial inneren Umfang der Felge befinden sich die Felgenhörner im Innenraum des Reifens, so daß die Reifenseitenwände ungehindert einfedern und sich nach seitlich außen wölben können.

Die Reifenwülste liegen im wesentlichen in drei Bereichen an der Felge an, nämlich auf radial inneren Sitzflächen des Felgenkranzes, an den senkrechten Flächen der Felgenhörner und an den radial inneren Flächen der Felgenhörner. Durch die am Wulstkern angreifenden Karkaßkräfte werden radial nach innen gerichtete Kräfte und außerdem Kippmomente am Reifenwulst erzeugt, die an den drei genannten Paßflächen an der Felge aufgefangen werden müssen. Es ist nicht einfach, die Anteile dieser Paßflächen für den gesamten Wulstsitz an der Felge optimal auszuwählen. Diese Schwierigkeiten nehmen insbesondere aufgrund nicht zu vermeidender Toleranzen bei in Serie gefertigten Felgen und Reifen noch zu. In der DE-A-36 21 849 wurde zur Beherrschung dieser Probleme vorgeschlagen, einen ring- und/oder scheibenförmigen Stützkörper zur Aufnahme von Radialkräften und Kippmomenten des Wulstes an der radial inneren Fläche des Wulstes zumindest im axial inneren Bereich vorzusehen, der relativ zur Felgendrehachse an nichtelastischen Teilen des Fahrzeugrads zentriert ist. Bei dieser Lösung ist also außer de Reifen und der Felge als weiteres Bauteil ein Stützkörper erforderlich, der darüber hinaus mit geeigneten Mitteln an der Felge zentrierbar sein muß. Bei dem vorbekannten Fahrzeugrad befindet sich zwischen dem Reifenwulst und dem Felgenkranz ein Spalt, so daß der Reifenwulst nicht unmittelbar am radial inneren Umfang des Felgenkranzes anliegt.

Der Erfindung leigt die Aufgabe zugrunde, die geschilderten Probleme mit einfacheren Mitteln zu lösen, d.h. es soll ein Fahrzeugrad mit einem verbesserten Wulstsitz auf der Felge angegeben werden, bei dem insbesondere Toleranzunterschiede bei der Reifen- und Felgenfertigung keinen spürbaren Einfluß auf die Rundlaufeigenschaften des Rads ausüben.

Diese Aufgabe wird erfindungsgemäß dadurch gelöst, daß die Wulstsitzflächen des Reifens mit Erhebungen und Vertiefungen versehen sind und daß bei montiertem und auf Betriebsdruck aufgepumptem Reifen die Erhebungen der Wulstsitzflächen auf die Felgensitzflächen einen Kompressionsdruck ausüben, der im Bereich der Wulstzehen zwischen 8 und 56% und auf Höhe der Wulstkernmitten zwischen 1 und 26% beträgt. Eine weitere Lösung besteht darin, daß die der Mittelebene des Fahrzeugrads zugewandten Seiten der Reifenwülste zumindest in der Nähe der Wulstzehen mit rillenartigen Einschnitten versehen sind, die bevorzugt in Umfangsrichtung verlaufen, und daß bei montiertem und auf Betriebsdruck aufgepumptem Reifen die Wulstzehen auf die Felgensitzflächen einen Kompressionsdruck ausüben, der zwischen 8 und 56% liegt. Schließlich können die beiden angegebenen Lösungen auch miteinander kombiniert werden.

Bei einem heutigen Standardreifen wird der Kompressionsdruck definiert als das Verhältnis des angebotenen Gummis (Dicke) unter dem Wulstkern zum Abstand zwischen dem Kern und der Felge. Dieses Meßverfahren wird im Rahmen der vorliegenden Anmeldung entsprechend übernommen, wobei die Gummidicke (inklusive Karkaßgewebe) radial außen von Kern maßgebend ist. Der Kompressionsdruck über der Kernmitte ergibt sich dann zu

$$\left( \frac{W_1}{F_1} - 1 \right) \cdot 100 \; [\%]$$

$W_1$ = Gummidicke zwischen dem radial äußeren Wulstkernrand und dem radial äußeren Wulstrand auf Höhe der Wulstkernmitte beim unbelasteten Reifen,
$F_1$ = Abstand zwischen dem radial äußeren Wulstkernrand und dem Felgenkranz auf Höhe der Wulstkernmitte beim montierten Reifen.

Entsprechen wird der Kompressionsdruck an der Wulstzehe definiert durch

$$\left(\frac{W_2}{F_2} - 1\right) \cdot 100 \ [\%]$$

$W_2$ = Gummidicke zwischen einer Parallelen zur Reifendrehachse durch den radial äußeren Wulstkernrand und dem radial äußeren Wulstrand auf Höhe der Wulstzehen,

$F_2$ = Abstand zwischen einer Parallelen zur Reifendrehachse durch den radial äußeren Wulstkernrand und dem Felgenkranz auf Höhe der Wulstzehe beim montierten Reifen.

Die Erfindung geht von der Erkenntnis aus, daß einerseits im Fahrbetrieb mit dem aufgepumpten Reifen, wenn die Karkaßkräfte voll wirksam sind, eine vollständige Anlage der Wulstsitzflächen am radial inneren Umfang des Felgenkranzes gewährleistet sein muß und daß andererseits, wenn aufgrund von Fertigungstoleranzen radial außen vom Wulstkern zu viel Gummi im Reifenwulst vorhanden ist, dieser Gummi seitlich in Vertiefungen des Reifenwulstes ausweichen kann, so daß jeder Wulst sich in der Weise an das benachbarte Felgenhorn legen kann, daß über den gesamten Umfang ein gleichmäßiger Abstand zwischen dem Wulstkernring und dem Felgenhorn besteht. Hierdurch ergibt sich eine weitere Verbesserung der Rundlaufeigenschaften und der Dichtfunktion in allen Betreibslagen. Durch die zahlreichen Vertiefungen ergibt sich weiterhin der Vorteil einer Gewichtsreduzierung und Gummieinsparung.

Gemäß einer vorteilhaften Ausgestaltung der Erfindung können die beiden vorgeschlagenen unabhängigen Lösungen auch miteinander kombiniert werden, d.h., der Reifenwulst kann sowohl in der radial äußeren Wulstsitzfläche als auch in der axial inneren Seitenfläche mit Vertiefungen versehen sein.

Gemäß einer weiteren vorteilhaften Ausgestaltung der Erfindung können die Vertiefungen derart konzipiert sein, daß die zu ihrer Abformung dienenden Rippen der Vulkanisierform während der Reifenvulkanisation zum Fixieren der Wulstkernringe in den Wülsten wirksam sind.

Je nachdem, mit welchem Betriebsdruck der Reifen gefahren werden soll, kann man mit Hilfe der Erfindung den Kompressionsdruck definiert wählen, mit dem der Reifenwulst an dem Felgenkranz anliegen soll.

Nahfolgend wird ein Ausführungsbeispiel der Erfindung anhand einer Zeichnung näher erläutert. Es zeigt

Fig. 1 ein Fahrzeugrad, bei dem der Reifen betriebsfertig montiert ist und bei dem die Wulstsitzfläche mit U-förmigen Vertiefungen versehen ist, in einem radialen Teilschnitt,

Fig. 2 eine schematische Prinzipskizze mit einem kompressionsfreien Reifenwulst, der im Bereich der Wulstsitzfläche drei rillenförmige Vertiefungen aufweist und mit einem dem Wulst zugeordneten Felgenteil, in einem radialen Teilschnitt,

Fig. 3 einen Reifenausschnitt im Bereich eines Reifenwulstes mit V-förmigen, gegeneinander versetzt angeordneten Vertiefungen im Bereich der Wulstsitzfläche in einer perspektivischen Ansicht,

Fig. 4 einen weiteren Reifenausschnitt im Wulstbereich mit schräg zur Umfangsrichtung verlaufenden, im Querschnitt U-förmigen Vertiefungen in der Wulstsitzfläche,

Fig. 5 ein Fahrzeugrad, bei dem die der Mittelebene des Rads zugewandte Seite des Reifenwulstes mit rillenartigen Einschnitten versehen ist, in einem radialen Teilschnitt,

Fig. 6 ein Fahrzeugrad, bei dem der Reifenwulst sowohl in der Wulstsitzfläche als auch auf der axial inneren Seite mit Vertiefungen bzw. Einschnitten versehen ist.

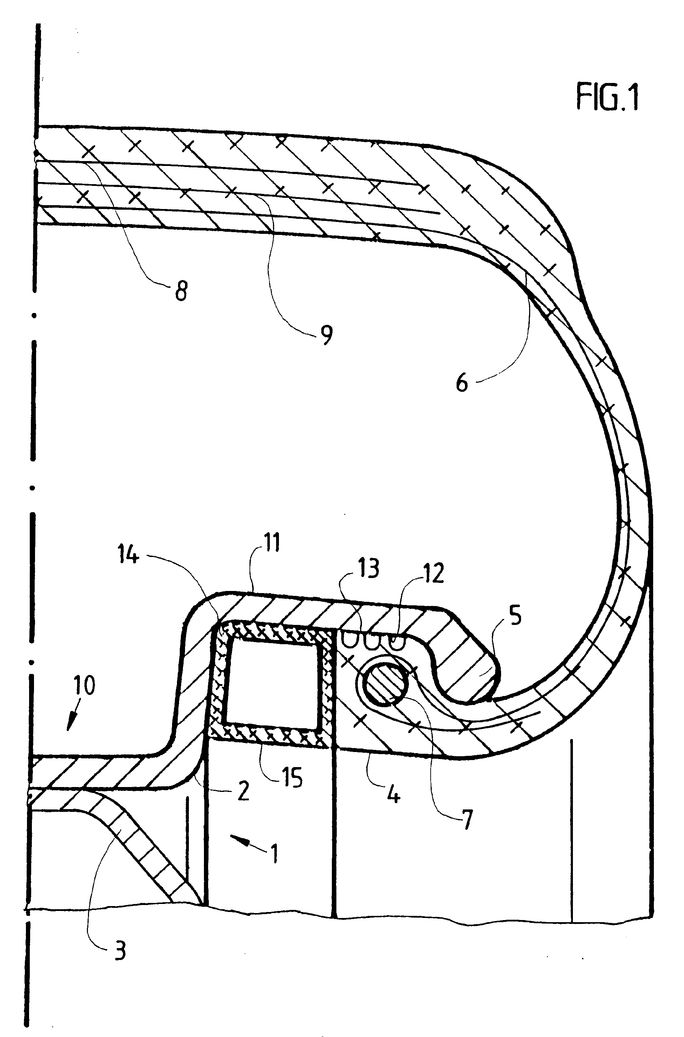

Das Fahrzeugrad der Fig. 1 besteht im wesentlichen aus einer starren einteiligen Felge 1, die in üblicher Weise durch Anschweißen eines Felgenkranzes 2 an eine Felgenschüssel 3 gebildet ist, und aus einem Reifen, der mit seinen Wülsten 4 am radial inneren Umfang des Felgenkranzes 2 neben seitlich außen sich befindlichen, sich im wesentlichen nach radial innen erstreckenden Felgenhörnern 5 angeordnet ist.

Bei dem Reifen handelt es sich bevorzugt um einen Gürtelreifen mit einem relativ kleinen Höhe/Breite-Verhältnis, bei dem eine Radialkarkasse 6 in den Wülsten 4 durch Umschlingen von zug- und druckfesten Wulstkernen 7 verankert ist. Zwischen der Karkasse 6 und der Lauffläche 8 befindet sich ein üblicher Verstärkungsgürtel 9.

Der Felgenkranz 2 ist in seinem mittleren Bereich auf der radial äußeren Seite zu einem üblichen Tiefbett 10 ausgebildet, während die seitlichen in Querrichtung geneigten Bereiche als Stützflächen 11 für einen Pannenlauf dienen, wenn der Reifen einmal drucklos wird. Die seitlichen Teile des Felgenkranzes 2 mit den Stützflächen 11 verlaufen in Querrichtung geneigt, wobei die Neigung bei PKW-Felgen 5° gegenüber der Felgendrehachse beträgt. Durch diese Neigung werden auf der radial inneren Seite des Felgenkranzes konische Felgensitzflächen 12 gebildet, auf denen sich nach der Reifenmontage die Reifenwülste 4 mit Wulstsitzflächen 13 befinden. Durch die ebenfalls geneigt verlaufende Verlängerung der Felgensitzflächen 12 nach axial innen hin werden in diesem Bereich Montagehochbetten 14 gebildet, die erforderlich sind, um den Reifen auf eine einteilige Felge montieren zu können. Nach der Reifenmontage können die Räume mit den Montagehochbetten 14 durch Abdeckringe 15 ausgefüllt sein, um ein Eindringen von Schmutz und Wasser in diese Räume zu vermeiden.

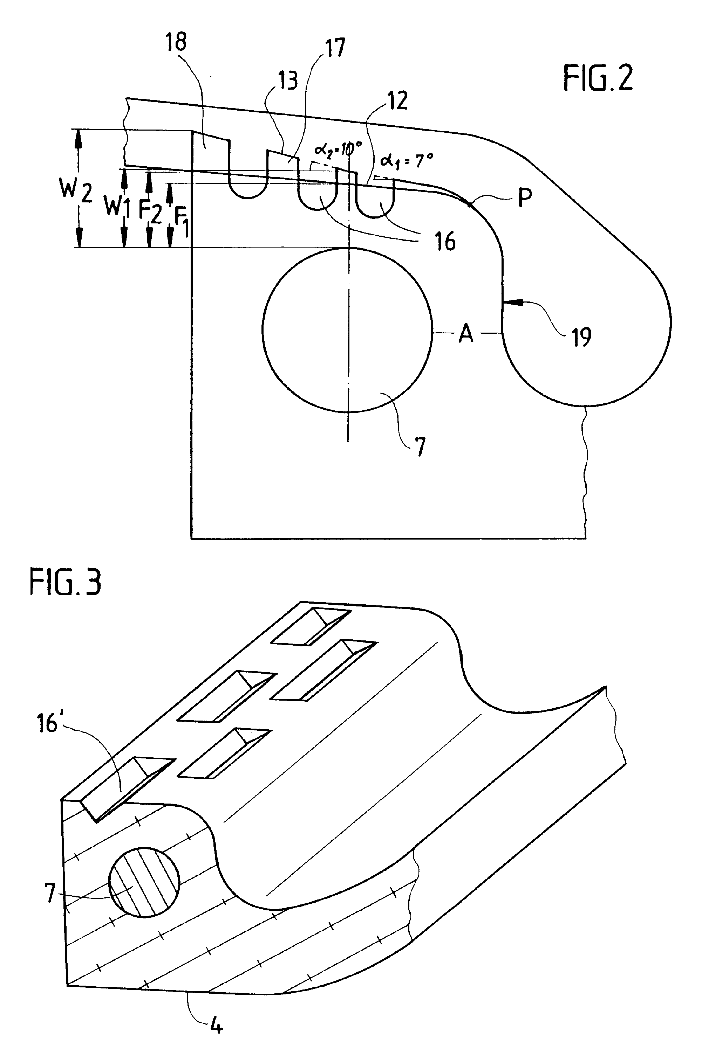

Nachfolgend soll die Ausgestaltung des Reifens und der Felge im Bereich der Reifenwülste 4 und der Felgenhörner 5 anhand der Prinzipskizze gemäß Fig. 2 näher erläutert werden. Dabei entspricht der Verlauf des Felgenkranzes 2 mit den geneigten Stützflächen 11 und den Felgenhörnern 5 der Felge gemäß Figur 1. Der Reifenwulst 4 mit dem Wulstkern 7 ist dagegen in einer entspannten Position gezeichnet, die er - wenn man für Reifen- und Felgenachse einen identischen Verlauf voraussetzt - ohne Vorhandensein des Felgenkranzes 2 einnehmen würde. Man erkennt, daß ausgehend von etwa einem gemeinsamen Punkt P (Kreuzungspunkt zwischen der Felgensitzfläche 12 und der Wulstsitzfläche 13 beim radialen Schnitt) die Wulstsitzfläche 13, d.h. der radial äußere Rand des Reifenwulstes 4 nach axial innen hin stärker ansteigt als die mit einer 5°-Neigung versehene Felgensitzfläche 12, und zwar mit zwei unterschiedlichen Steigungswinkeln $\alpha_1$ von zunächst ca. 7° und in der axial inneren Hälfte $\alpha_2$ ca. 10°.

Im Bereich der Wulstsitzfläche 13 befinden sich drei in Umfangsrichtung verlaufende Vertiefungen 16 in Form von U-förmigen Rillen. Die zwischen den Rillen 16 verbliebenen Gummiteile bilden stegartige Erhebungen 17. Dadurch, daß der Außendurchmesser des Reifens im Wulstbereich größer gewählt ist als der jeweils zuzuordnende Felgeninnendurchmesser erhält man den Effekt, daß nach der Montage und dem Aufpumpen des Reifens der Reifenwulst 4 mit einem definierten Kompressionsdruck auf der Felgensitzfläche 12 am Felgenkranz 2 anliegt. Die Vertiefungen 16 dienen dazu, daß das zu komprimierende Gummimaterial sich in diese Räume verschieben kann. Durch die Dicke des Gummimaterials (inklusive Karkaßlage) $W_1$, die vom radial äußeren Rand des Wulstkerns 7 zum radial äußeren Rand des Wulstes 4 gemessen wird, bestimmt sich gemäß oben stehender Definition der Kompressionsdruck, den der Reifen nach dem Aufpumpen auf Höhe des Wulstkerns 7 auf die Felgensitzfläche 12 ausübt, zu

$$\left( \frac{W_1}{F_1} - 1 \right) \cdot 100 \ [\%]$$

Zahlenmäßig sollte der Kompressionsdruck in diesem Bereich zwischen 1 und 26 %, bevorzugt zwischen 1 und 10% und mit einem besonders günstigen Wert bei ca. 6,5% liegen. Die höheren Kompressionswerte erzielt man, wenn man für den Steigungswinkel $\alpha_1$ der Felgensitzfläche 12 Werte zwischen 8 und 13° wählt. Mittlere Werte ergeben sich bei $\alpha_1$ zwischen 5,5 und 7°, während man niedrige Kompressionswerte erzielt, wenn man $\alpha_1$ wenig größer als 5° wählt. Ein höherer Kompressionswert ist auch dadurch erzielbar, daß in der axial äußeren Wulsthälfte der Reifendurchmesser im radial äußeren Wulstbereich größer gewählt wird als der zugeornete Felgeninnendurchmesser, und zwar bei parallelem Verlauf von Felgensitzfläche und Wulstsitzfläche.

Gemäß der obenstehenden Definition für den Kompressionsdruck im Bereich der Wulstzehe, wobei die Dicken $W_2$ und $F_2$ mit derselben Bedeutung in Fig. 2 wiedergegeben sind, sollte bei aufgepumptem Reifen der Kompressionsdruck im Bereich der Wulstzehe 18 Werte zwischen 8 und 56% aufweisen, mit einem bevorzugten Bereich zwischen 15 und 40% und mit einem besonders günstigen Wert bei ca. 28%. Die hohen Kompressionswerte werden erzielt, wenn man den Steigungswinkel $\alpha_2$ für die Wulstsitzfläche 13 im Bereich der aixal inneren Hälfte des Reifenwulstes 4 zwischen 12 und 15° wählt, während man den besonders günstigen Kompressionswert von 28% bei einem Steigungswinkel von $\alpha_2$ gleich ca. 10° erhält. Bei den vorstehend angegebenen Steigungswinkeln $\alpha_1$ und $\alpha_2$ für die Wulstsitzfläche 13 wurde jeweils ein Steigungswinkel von 5° für die Felgensitzfläche 12 angenommen, wie es bei PKW-Felgen der Fall ist.

Die Rillen 16 können bei PKW-Reifen 2 bis 3 mm breit sein, während ihre Tiefe 4 mm nicht übersteigen sollte. Es können maximal drei bis vier Rillen nebeneinander angeordnet sein, und sie können bevorzugt als exakte umlaufende Umfangsrillen ausgebildet sein. In diesem Fall sollte die axial innere Rille axial innen von einer Erhebung 17 begrenzt sein, um kein Eindringen von Schmutz und Wasser in die Zwischenräume zwischen Felgenkranz 2 und Reifenwulst 4 zu ermöglichen. Weiterhin sollten im Bereich des Punktes P (s. Fig. 2) und axial außen davon keine Rillen mehr vorhanden sein, um die Dichtwirkung des Reifenwulstes 4 im Bereich der Dichtflächen 19 nicht zu gefährden. Die Vertiefungen 16 in der Wulstsitzfläche 13 sollten einen maximalen Flächenanteil von bis zu 40% (Negativanteil) der gesamten Wulstsitzfläche 13 aufweisen.

In Fig. 3 ist ein Reifenausschnitt im Bereich eines Reifenwulstes 4 dargestellt, bei dem sich in der Wulstsitzfläche 13 V-förmige, gegeneinander versetzt angeordnete Vertiefungen 16' befinden. Die Vertiefungen 16' sind in zwei Reihen nebeneinander angeordnet, doch können selbstverständlich auch drei oder vier Reihen vorhanden sein, auch können die Vertiefungen 16' länger sein als dargestellt. Eine weiter Variation ist dadurch möglich, daß die Vertiefungen 16' nicht exakt in Umfangsrichtung verlaufen, sondern unter einem Schrägwinkel. Im Extremfall ist bei Bedarf sogar ein axialer Verlauf möglich.

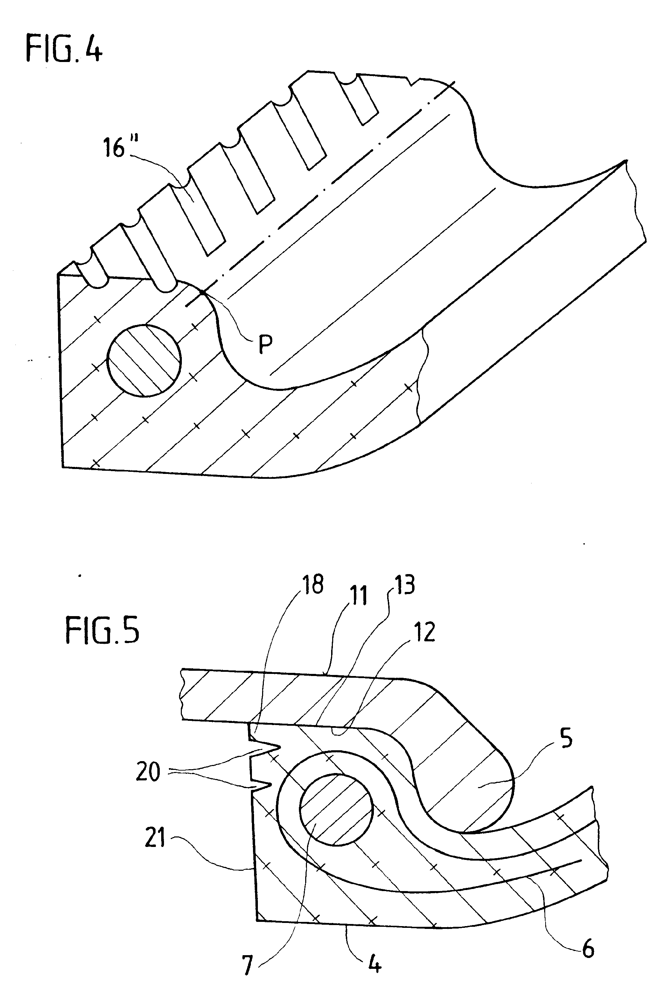

Fig. 4 zeigt eine weitere Variante, bei der Vertiefungen 16″ mit U-förmigem Querschnitt schräg zur Reifenumfangsrichtung im Bereich des Wusltes 4 verlaufen. Sie sind zueinander parallel verlaufend dargestellt und enden axial außen noch vor Erreichen des Bereiches P gemäß Fig. 2, um eine Dichtwirkung des Reifenwulstes 4 nicht zu gefährden.

Selbstverständlich sind auch noch andere Varianten von Vertiefungen im Bereich der Wulstsitzfläche 13 möglich, auch können Elemente der vorstehend beschriebenen Varianten untereinander kombiniert werden. Im Falle von LKW-Reifen wird man die geometrischen Abmessungen selbstverständlich entsprechend anpassen, so daß z.B. die Tiefen der Rillen 16 bis zu 8 mm betragen können.

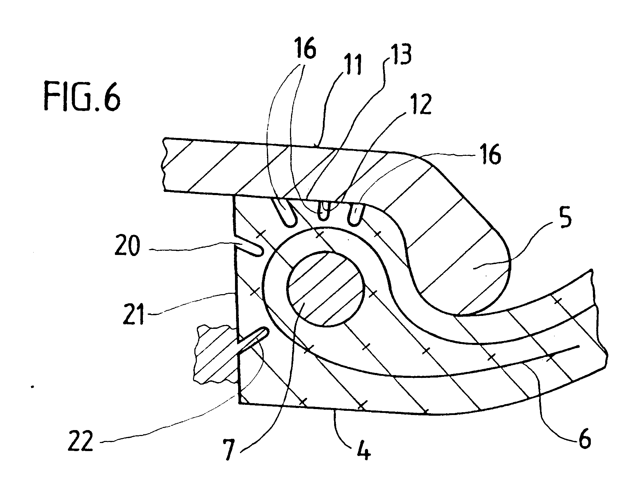

Fig. 5 zeigt eine etwas anders gestaltete Lösung des Problems. Der Felgenkranz 2 ist entsprechend dem der Fig. 1 gestaltet, d.h. mit radial äußeren Stützflächen 11 und mit radial inneren Felgensitzflächen 12 sowie mit einem sich nach radial innen erstreckenden Felgenhorn 5. Im Reifenwulst 4 befindet sich wiederum ein drucksteifer Wulstkern 7, der zur Verankerung der Karkasse 6 dient. Die Dicke des Gummimaterials radial außen vom Wulstkern 7 ist derart gewählt, daß sich in der Wulstsitzfläche 13 auf Höhe des Kerns 7 nach dem Aufpumpem des Reifens ein Kompressionsdruck einstellt, der den Wert Null nur gerinfügig überschreitet. Im Bereich der Wulstzehe 18 sollte der Kompressionsdruck dagegen wiederum zwischen 8 und 56% liegen, mit einem besonders günstigen Wert bei ca. 30%. um in diesem Bereich Toleranzunterschiede bei der Felgen- bzw. Reifenfertigung ausgleichen zu können, sind jedoch nicht etwa Vertiefungen im Bereich der Wulstsitzfläche 13 vorgesehen, sondern bevorzugt in Umfangsrichtung verlaufende Einschnitte 20, die sich in den der Mittelebene des Fahrzeugrads zugewandten Seiten 21 der Reifenwülste 4 befinden, und zwar bevorzugt radial außen in der Nähe der Wulstzehen 18. Die Einschnitte 20 können bis zu 10 mm tief sein und wiederum einen V- bzw. U-förmigen Querschnitt aufweisen.

Fig. 6 zeigt eine Variante, die durch Kombination der Beispiele gemäß Fig. 1 bis 4 mit dem Beispiel der Fig. 5 erhalten wird. Dabei entspricht der Felgenkranz 2 dem der Fig. 1 bis. 5, so daß er wiederum radial äußere Stützflächen 11 radial innere Felgensitzflächen 12 sowie ein sich nach radial innen erstreckendes Felgenhorn 5 aufweist. Im Reifenwulst 4 befindet sich wieder ein drucksteifer Wulstkern 7, an dem die Karkasse 6 verankert ist.

Zur Erzielung einer gewünschten Kompression, mit der die Wulstsitzflächen 13 bei aufgepumptem Reifen an den Felgensitzflächen 12 anliegen, befinden sich sowohl in den Wulstsitzflächen 13 Vertiefungen 16 als auch auf den axial innern Seiten 21 rillenartige Einschnitte 20. Dabei können die Vertiefungen 16 und die Einschnitte 21 untereinander eine unterschiedlich Breite und vor allem Tiefe aufweisen. Häufig ist es weiterhin zweckmäßig, zur Erzielung einer höheren Flexibilität im Bereich der Wulstsitzflächen 13 die Vertiefungen 16 bzw. die Einschnitte 20 mit ihren Mittelebenen nicht senkrecht zu den Flächen 13, 21 anzuordnen, sondern schräg mit unterschiedlichen Winkeln. Dabei ist jedoch zu beachten, daß nach der Vulkanisation ein Entformen des Reifens im Bereich der Vertiefungen 16 und der Einschnitte 20 möglich bleibt.

Gemäß einer weiteren Ausgestaltung der Erfindung, die ebenfalls in Fig. 6 angedeutet ist, werden die Vertiefungen 16 und die Einschnitte 20 so konzipiert, daß sie mit ihrem Grund in der Nähe der Karkasse 6 enden. Die zu ihrer Abformung bei der Reifenvulkanisation dienenden Rippen 22 werden dann gleichzeitig dazu eingesetzt, den Wulstkern 7 im Reifenwulst 4 zu fixieren, um ein "Schwimmen" während der Vulkanisation zu verhindern.

## Patentansprüche

1. Luftbereiftes Fahrzeugrad mit einer starren Felge (1), die im wesentlichen sich nach radial innen erstreckende Felgenhörner (5) und auf der radial inneren Seite des Felgenkranzes (2) in Querrichtung geneigt verlaufende Felgensitzflächen (12) und je ein Montagehochbett (14) für jeden Reifenwulst (4) aufweist und die auf der radial äußeren Seite mit Pannenlaufstützflächen (11) versehen sein kann, und mit einem Reifen aus Gummi oder gummiähnlichen Kunststoffen, dessen Wülste (4) mit Wulstsitzflächen (13) radial innen vom Felgenkranz (2) neben den Felgenhörnern (5) auf den Felgensitzflächen (12) angeordnet sind und dessen Karkasse (6) in den Wülsten durch Umschlingen von drucksteifen Wulstkernen (7) verankert ist, **dadurch gekennzeichnet**, daß die Wulstsitzflächen (13) des Reifens mit Erhebungen (17) und Vertiefungen (16,16′,16″) versehen sind und daß bei montiertem und auf Betriebsdruck aufgepumptem Reifen die Erhebungen (17) der Wulstsitzflächen (13) auf die Felgensitzflächen (12) einen Kompressionsdruck (Verhältnis der ausgebotenen Gummis radial außen vom Wulstkern zum Abstand zwischen dem Kern (7) und der Felge (12)) ausüben, der im Bereich der Wulstzehen (18) zwischen 8 und 56% und auf Höhe der Wulstkernmitten zwischen 1 und 26% beträgt.

2. Luftbereiftes Fahrzeugrad mit einer starren Felge (1), die im wesentlichen sich nach radial innen erstreckende Felgenhörner (5) und auf der radial inneren Seite des Felgenkranzes (2) in Querrichtung geneigt verlaufende Felgensitzflächen (12) und je ein Montagehochbett (14) für jeden Reifenwulst (4) aufweist und die auf der radial äußeren Seite mit Pannenlaufstützflächen (11) versehen sein kann, und mit einem Reifen aus Gummi oder gummiähnlichen Kunststoffen, dessen Wülste (4) mit Wulstsitzflächen (13) radial innen vom Felgenkranz neben den Felgenhörnern (5) auf den Felgensitzflächen (12) angeordnet sind und dessen Karkasse (6) in den Wülsten durch Umschlingen von drucksteifen Wulstkernen (7) verankert ist dadurch gekennzeichnet, daß die der Mittelebene des Fahrzeugrads zugewandten Seiten (21) der Reifenwülste (4) zumindest in der Nähe der Wulstzehen (18) mit rillenartigen Einschnitten (20) versehen sind, die bevorzugt in Umfangsrichtung verlaufen und daß bei montiertem und auf Betriebsdruck aufgepumptem Reifen die Wulstzehen (18) auf die Felgensitzflächen einen Kompressionsdruck ausüben, der zwischen 8 und 56% liegt.

3. Fahrzeugrad nach den Ansprüchen 1 und 2, dadurch gekennzeichnet, daß sowohl die Wulstsitzflächen (13) mit Vertiefungen (16,16',16") als auch die axial inneren Seiten (21) mit rillenartigen Einschnitten (20) versehen sind.

4. Fahrzeugrad nach Anspruch 1, dadurch gekennzeichnet, daß die Vertiefungen (16,16',16") in der Wulstsitzfläche (13) einen Flächenanteil von bis zu 40% der gesamten Wulstsitzfläche (13) aufweisen.

5. Fahrzeugrad nach Anspruch 1, dadurch gekennzeichnet, daß die Erhebungen (17) und Vertiefungen (16) bevorzugt in Umfangsrichtung verlaufen.

6. Fahrzeugrad nach Anspruch 1, dadurch gekennzeichnet, daß im Falle eines PKW-Rades als Vertiefungen (16,16',16") zwei bis vier Rillen nebeneinander im Bereich der Wulstsitzfläche (13) vorhanden sind und daß die Breite der Rillen 2 bis 3 mm und die maximale Tiefe 4 mm beträgt.

7. Fahrzeugrad nach Anspruch 1, dadurch gekennzeichnet, daß die Rillen (16) bei LKW-Reifen eine Tiefe von maximal 8 mm aufweisen.

8. Fahrzeugrad nach Anspruch 1 oder 2, dadurch gekennzeichnet, daß die Vertiefungen (16) und/oder die Einschnitte (20) in Form exakter Umfangsrillen oder Rillenabschnitte vorliegen.

9. Fahrzeugrad nach Anspruch 8, dadurch gekennzeichnet, daß die Rillenabschnitte in Umfangsrichtung gegeneinander versetzt sind.

10. Fahrzeugrad nach Anspruch 1 oder 2, dadurch gekennzeichnet, daß die Rillen (16,16',16") und/oder die Einschnitte (20) einen V-förmigen oder U-förmigen Querschnitt aufweisen.

11. Fahrzeugrad nach Anspruch 1 oder 2, dadurch gekennzeichnet, daß die Rillen (16,16',16") und/oder die Einschnitte (20) unterschiedlich tief sind.

12. Fahrzeugrad nach Anspruch 1 oder 2, dadurch gekennzeichnet, daß die Mittelebenen der Rillen (16,16',16") bzw. der Rillenabschnitte bzw. der Einschnitte (20) schräg zu den Flächen (13) bzw. (21) verlaufen.

13. Fahrzeugrad nach den Ansprüchen 1, 2 oder 3, dadurch gekennzeichnet, daß die zur Abformung der Rillen (16,16',16") bzw. Einschnitte (20) dienenden Rippen (22) während der Vulkanisation zur Fixierung der Wulstkerne eingesetzt sind.

## Claims

1. Vehicle wheel fitted with a pneumatic tyre, having a rigid rim (1), which comprises substantially radially inwardly extending rim flanges (5), rim seating surfaces (12) which slope in a transverse direction on the radially internal surface of the rim ring (2), and a respective assembly high bed (14) for each tyre bead (4), which rim may be provided with puncture supporting surfaces (11) on the radially external surface, and said vehicle wheel having a tyre formed from rubber or rubber-like plastics materials, the beads (4) of which, together with bead seating surfaces (13), are disposed radially internally of the rim ring (2) adjacent the rim flanges (5) on the rim seating surfaces (12), and the carcase (6) of said tyre is secured in the beads by being looped around pressure-resistant bead cores (7), characterised in that the bead seating surfaces (13) of the tyre are provided with raised portions (17) and recesses (16, 16', 16"), and in that, when the tyre is assembled and inflated to the operating pressure, the raised portions (17) of the bead seating surfaces (13) exert upon the rim seating surfaces (12) a compression pressure (ratio between the innate rubber radially externally of the bead core and the spacing between the core (7) and the rim (12)), which pressure is between 8 % and 56 % in the region of the bead toes (18) and is between 1 % and 26 % at the height of the bead core centres.

2. Vehicle wheel fitted with a pneumatic tyre, having a rigid rim (1), which comprises substantially radially inwardly extending rim flanges (5), rim seating surfaces (12) which slope in a transverse direction on the radially internal surface of the rim ring (2), and a respective assembly high bed (14) for each tyre bead (4), which rim may be provided with puncture supporting surfaces (11) on the radially external surface, and said vehicle wheel having a tyre formed from rubber or rubber-like plastics materials, the beads (4) of which, together with bead seating surfaces (13), are disposed radially internally of the rim ring (2) adjacent the rim flanges (5) on the rim seating surfaces (12), and the carcase (6) of said tyre is secured in the beads by being looped around pressure-resistant bead cores (7), characterised in that the surfaces (21) of the tyre beads (4) facing the central plane of the vehicle wheel are provided with groove-like incisions (20), at least in the vicinity of the bead toes (18), said incisions preferably extending in a circumferential direction, and in that, when the tyre is assembled and inflated to the operating pressure, the bead toes (18) exert upon the rim seating surfaces a compression pressure which lies between 8 % and 56 %.

3. Vehicle wheel according to claims 1 and 2, characterised in that both the bead seating surfaces (13) are provided with recesses (16, 16′, 16″), and the axially internal surfaces (21) are provided with groove-like incisions (20).

4. Vehicle wheel according to claim 1, characterised in that the recesses (16, 16′, 16″) in the bead seating surface (13) have a surface area of up to 40 % of the entire bead seating surface (13).

5. Vehicle wheel according to claim 1, characterised in that the raised portions (17) and recesses (16) preferably extend in a circumferential direction.

6. Vehicle wheel according to claim 1, characterised in that, in the case of a passenger vehicle wheel, two to four grooves are provided as recesses (16, 16′, 16″) adjacent one another in the region of the bead seating surface (13), and in that the width of the grooves is 2 to 3 mm, and the maximum depth is 4 mm.

7. Vehicle wheel according to claim 1, characterised in that, in the case of heavy goods vehicle tyres, the grooves (16) have a maximum depth of 8 mm.

8. Vehicle wheel according to claim 1 or 2, characterised in that the recesses (16) and/or the incisions (20) are in the form of exact circumferential grooves or groove portions.

9. Vehicle wheel according to claim 8, characterised in that the groove portions are offset from one another in a circumferential direction.

10. Vehicle wheel according to claim 1 or 2, characterised in that the grooves (16, 16′, 16″) and/or the incisions (20) have a V-shaped or U-shaped cross-section.

11. Vehicle wheel according to claim 1 or 2, characterised in that the grooves (16, 16′, 16″) and/or the incisions (20) have different depths.

12. Vehicle wheel according to claim 1 or 2, characterised in that the central planes of the grooves (16, 16′, 16″), or respectively the groove portions, or respectively the incisions (20), extend inclinedly relative to the faces (13) and (21) respectively.

13. Vehicle wheel according to claims 1, 2 or 3, characterised in that the ribs (22), which serve to shape the grooves (16, 16′, 16″), or respectively the incisions, are introduced during vulcanisation for the securement of the bead cores.

## Revendications

1. Roue de véhicule à bandage pneumatique, comprenant une jante rigide (1) qui présente des rebords (5) de jante dirigés sensiblement radialement vers l'intérieur et, sur la face radialement intérieure de la couronne (2) de la jante, des surfaces de portée (12) de jante qui sont inclinées dans la direction transversale, et une base de montage haute (14) pour chaque talon (4) du pneumatique, et qui peut être muni de surfaces de portée de roulement en cas de panne (11) sur sa surface radialement extérieure, et un pneumatique en caoutchouc ou matière plastique analogue au caoutchouc, dont les talons (4) présentent leurs surfaces de portée (11) de talon radialement à l'intérieur de la couronne (2) de la jante, à côté des rebords (5) de la jante, sur les surfaces de portée (12) de la jante, tandis que sa carcasse (6) est ancrée dans les talons par enroulement autour de tringles (7) de talon rigides à la compression, caractérisée en ce que les surfaces de portée (13) du talon du pneumatique sont munies de protubérances (17) et d'évidements (16, 16′, 16″) et en ce que, lorsque le pneumatique est monté et gonflé à la pression de service, les protubérances (17) des surfaces de portée (13) du talon exercent sur les surfaces de portée (12) de la jante une pression de compression (rapport liant le caoutchouc présent radialement à l'extérieur du talon à la distance entre la tringle (7) et la jante (12)) qui est d'entre 8 % et 56 % dans la région de la pointe du talon et d'entre 1 % et 26 % à la hauteur du milieu de la tringle de talon.

2. Roue de véhicule à bandage pneumatique, comprenant une jante rigide (1) qui présente des rebords (5) de jante dirigés sensiblement radialement vers l'intérieur et, sur la face radialement intérieure de la couronne (2) de la jante, des surfaces de portée (12) de jante qui sont inclinées dans la direction transversale, et une base de montage haute (14) pour chaque talon (4) du pneumatique, et qui peut être muni de surfaces de portée de roulement en cas de panne (11) sur sa surface radialement extérieure, et un pneumatique en caoutchouc ou matière plastique analogue au caoutchouc, dont les talons (4) présentent leurs surfaces de portée (13) de talon radialement à l'intérieur de la couronne (2) de la jante, à côté des rebords (5) de la jante, sur les surfaces

7

de portée (12) de la jante, tandis que sa carcasse (6) est ancrée dans les talons par enroulement autour de tringles (7) de talon rigides à la compression, caractérisée en ce que les côtés (21) des talons (4) du pneumatique qui sont dirigés vers le plan médian de la roue de véhicule sont munis, du moins dans la région de la pointe (18) du talon, d'entailles (20) en forme de sillons qui s'étendent de préférence dans la direction circonférentielle et en ce que, lorsque le pneumatique est monté et gonflé à la pression de service, les pointes (18) des talons exercent sur les surfaces de portée de la jante une pression de compression qui est d'entre 8 % et 56 %.

3. Roue de véhicule selon les revendications 1 et 2, caractérisée en ce que les surfaces de portée (13) du talon sont munies d'évidements (16, 16′, 16″) et que les côtés axialement intérieurs (21) sont aussi munis d'entailles (20) en forme de sillon.

4. Roue de véhicule selon la revendication 1, caractérisée en ce que les évidements (16, 16′, 16″) de la surface de portée (13) du talon représentent une proportion de surface allant jusqu'à 40 % de la surface de portée totale (13) du talon.

5. Roue de véhicule selon la revendication 1, caractérisée en ce que les protubérances (17) et les évidements (16) s'étendent de préférence dans la direction circonférentielle.

6. Roue de véhicule selon la revendication 1, caractérisée en ce que, dans le cas d'une roue pour voiture de tourisme, il est prévu comme évidements (16, 16′, 16″), deux à quatre sillons disposés l'un à côté de l'autre dans la région de la surface de portée (13) du talon et en ce que la largeur des sillons (2) atteint jusqu'à 3 mm et la profondeur maximale est de 4 mm.

7. Roue de véhicule selon la revendication 1, caractérisée en ce que les sillons (16) présentent une pronfondeur de 8 mm au maximum dans le cas de pneumatiques pour véhicules utilitaires.

8. Roue de véhicule selon la revendication 1, caractérisée, caractérisée en ce que les évidements (16) et/ou les entailles (20) se présentent sous la forme de sillons ou segments de sillons exactement circonférentiels.

9. Roue de véhicule selon la revendication 8, caractérisée en ce que les segments de sillons sont décalés les uns par rapport aux autres dans la direction circonférentielle.

10. Roue de véhicule selon la revendication 1 ou 2, caractérisée en ce que les sillons (16, 16′, 16″) et/ou les entailles (20) présentent une section en forme de V ou en forme de U.

11. Roue de véhicule selon la revendication 1 ou 2, caractérisée en ce que les sillons (16, 16′, 16″) et/ou les entailles (20) sont de profondeurs différentes.

12. Roue de véhicule selon la revendication 1 ou 2, caractérisée en ce que les plans médians des sillons (16, 16′, 16″) ou des segments de sillons ou des entailles (20) s'étendent obliquement aux surfaces (13) ou (21) respectivement.

13. Roue de véhicule selon les revendications 1, 2 et 3, caractérisée en ce que les nervures (22) qui servent à mouler les sillons (16, 16′, 16″) ou les entailles (20) pendant la vulcanisation sont mises à profit pour fixer la position des tringles de talon.

FIG.1

FIG.2

FIG.3

FIG.4

16"

P

FIG.5

18   11   13

12

5

20

21

7   4   6

FIG.6